Europäisches Patentamt

**European Patent Office**

Office européen des brevets

(11) Publication number : **0 429 321 B1**

## (12) EUROPEAN PATENT SPECIFICATION

(45) Date of publication of patent specification :
26.01.94 Bulletin 94/04

(51) Int. Cl.⁵ : **C01B 15/10**

(21) Application number : **90403038.4**

(22) Date of filing : **26.10.90**

(54) **Sodium carbonate perhydrate process.**

(30) Priority : **30.10.89 US 428729**

(43) Date of publication of application :
**29.05.91 Bulletin 91/22**

(45) Publication of the grant of the patent :
**26.01.94 Bulletin 94/04**

(84) Designated Contracting States :
**AT BE CH DE DK ES FR GB GR IT LI LU NL SE**

(56) References cited :
EP-A- 0 364 840
US-A- 3 122 417
PATENT ABSTRACTS OF JAPAN vol. 9, no.
119 (C-282)(1842) 23 May 1985, & JP-A-60
011210 (NIPPON PEROXIDE K.K.) 21 January
1985,

(73) Proprietor : **FMC Corporation**
**2000 Market Street**
**Philadelphia Pennsylvania 19103 (US)**

(72) Inventor : **Pfeffer, Henry Albert**
**6 Hollyhock Way**
**Mercerville, New Jersey 08619 (US)**
Inventor : **Adams, Charles, Jr.**
**108 Mitchell Avenue**
**Cartersville, Georgia 30120 (US)**

(74) Representative : **Rodhain, Claude et al**
**Cabinet Claude Rodhain 30, rue la Boétie**
**F-75008 Paris (FR)**

## Description

This invention provides a process to manufacture a free-flowing, stable, granular composition comprising 65% to 90% sodium carbonate perhydrate containing from about 11% to about 14% active oxygen.

Sodium carbonate perhydrate has been recognized to be a desirable component for a detergent composition because it is readily soluble in water, because it has a high active oxygen content, and because it also provides an inexpensive source of nonpolluting alkalinity. Pure sodium carbonate perhydrate conforms to the chemical formula $2Na_2CO_3.3H_2O_2$ which contains 15.28% active oxygen (AO).

Numerous processes have been proposed for manufacturing sodium carbonate perhydrate (SCP). One of the primary methods is a wet process in which aqueous solutions of hydrogen peroxide and sodium carbonate are mixed in a reactor and the SCP formed is filtered off. The product is sometimes salted out by the addition of sodium chloride or other suitable reagents. Such processes are disclosed in US-A-2 380 620; US-A-2 448 058; US-A-2 541 733. While the wet process offers advantages such as good mixing and heat transfer, it has the disadvantage that there typically is a substantial loss of active oxygen in the mother liquor, so that low peroxygen efficiencies are obtained; that is, conversion of hydrogen peroxide utilized to active oxygen in the finished product is low.

In another method, taught by US-A-3 555 696, SCP is made by a spray-drying process in which hydrogen peroxide solution is added immediately before atomization of a spray charge of sodium carbonate in a spray tower. Thereafter the product SCP is dried, yielding a very dusty product.

It is apparent from the prior art that large volumes of mother liquor are to be avoided. A process yielding high peroxygen efficiencies usually uses only a sufficiently large amount of water to act as a reaction medium and to take up the heat of reaction.

The desire to minimize the amount of water in the reaction system has led to exploration of the socalled "dry" method. However, when the reaction is carried out in the absence of a sufficient amount of water, the reaction is less efficient and decomposition losses are quite high. In the dry method, hydrogen peroxide is sprinkled directly onto sodium carbonate powder to form a moist mass, the mass is then dried, and the procedure is repeated to build up the oxygen content of the perhydrate. Attempts to operate such a process have produced only unsatisfactory perhydrate and thus it is not in commercial use, insofar as is known. Typical dry processes are taught in US-A- 3 864 454, in which it is necessary to dry the product in carbon dioxide and in EP-A-0 070 711, in which the reaction mixture is maintained in a vacuum before drying. In accordance with DD-A-212 947, the product is so fine that a separate recycling granulation step is required. On the other hand, US-A-4 171 280 avoids the heat problem by restricting the amount of hydrogen peroxide to provide a maximum active oxygen content of the product to 6%, thereby avoiding decomposition and caking of wet reaction mixtures.

The dry process for the formation of SCP has a basic deficiency, namely, the difficulty of proper heat transfer of the exotherms that are generated as a result of the reaction. Reaction between aqueous hydrogen peroxide and solid soda ash generates an exotherm in two ways: the heat of hydration of sodium carbonate with the water present in hydrogen peroxide, and the heat of perhydration, that is, the reaction of sodium carbonate with hydrogen peroxide to produce sodium carbonate perhydrate. Both these heats tend to increase the reaction temperature quite markedly, particularly in the absence of efficient mixing and/or cooling.

Dusting is another problem associated with the dry process. When finely divided soda ash is sprinkled with hydrogen peroxide solution and mixed very efficiently to dissipate the heat, a large amount of dust is formed. This results in low peroxygen efficiency and/or a product having low active oxygen values. On the other hand, if granular, dense soda ash is used, the dusting effects are less but the reaction becomes relatively inefficient.

A hybrid process combining the dry process and the wet process is taught by US-A-3 860 694 in which anhydrous or hydrated sodium carbonate having a particle size distribution between U.S. Standard Sieve No. 14 and 325 is contacted with a combination of 35% to 90% hydrogen peroxide, a magnesium stabilizer, and sufficient water to maintain the reaction mass moist. The moist reaction mass is reacted from 5 minutes to 3 hours. Subsequently the moist reaction mass is dried.

EP-A-0 363 852 and EP-A-0 364 840 teach a sodium carbonate perhydrate composition and a process for making it, in which hydrogen peroxide, anhydrous sodium carbonate, and a diphosphonic acid are reacted to make a composition in which sufficient anhydrous sodium carbonate is present to react with any water either already present in the composition, or any water which may be formed from the hydrogen peroxide. The diphosphonic acid appears to prevent any water present during the manufacture from being retained as sodium carbonate monohydrate or other hydrates. The process provides high peroxygen efficiency, low dusting and the product is very stable on storage. Its only apparent disadvantage is the maximum active oxygen concentration is about 11.2% which is about 73% sodium carbonate perhydrate. For some applications it is desirable to have a product with an active oxygen content higher than 11.2%.

The present invention provides a manufacturing process as stated in the main claim.

Preferably the temperature should be maintained between 60°C and 70°C during and for a short time after addition of the aqueous peroxide/phosphonate solution, and the rate of addition should be controlled to maintain a substantially dry reaction mixture.

The temperature of the reaction mixture can be maintained easily. For example, by a heat exchanger means providing sensible heat transfer between the reaction mixture and the reactor shell or by a gas stream contacting the reaction mixture providing sensible heat transfer for the reaction mixture.

Any suitable solids mixing reactor may be employed such as a fluid bed reactor or a solids mixing device such as a cone mixer, a ribbon mixer, or the like, provided the solids mixing reactor does not function as a size reduction device. Means should be provided in the reactor to conduct water vapor from the surface of the reaction mixture, such as, by directing a gas stream through the reactor. It is not necessary for a gas stream to be directed into the reaction mixture to provide part of the agitation of the reaction mixture. The velocity of a gas stream should be sufficiently low to avoid carrying off fines from the reactor.

The particle size distribution of the SCP product was found to be substantially the same as that of the sodium carbonate employed as feed. However, some agglomeration of fine particles does take place. Further, it was unexpectedly observed that not only was the peroxygen efficiency of the process essentially quantitative (98-100%), but the SCP product was stable, even without the addition of magnesium silicate, sodium silicate or other stabilizers required by prior art processes.

However, it is contemplated that stabilizers such as magnesium compounds, silicates or both may be added if desired to the soda ash, to the reaction mixture or to the hydrogen peroxide. In addition, it is contemplated that the SCP product may be subsequently coated or formulated into a product.

The particle size distribution of the sodium carbonate particles appears to be critical when measured either by product stability, peroxygen efficiency or by maximum active oxygen concentration.

Individual particles retained on a 212 $\mu$m sieve (U.S.A. Standard) are undesirable because of a low peroxygen efficiency, a low peroxygen assay and low storage stability. For the purpose of this invention a particle size distribution of less than 212 micrometers shall include particles passing through a U.S. Standard 212 $\mu$m sieve.

Any 65-85% aqueous hydrogen peroxide solution can be used for the process. Preferably about 70% hydrogen peroxide will be employed thereby minimizing the sensible heat needed to be added or deducted from the system. The hydrogen peroxide-diphosphonic acid solution must be added at a controlled rate to provide that the reaction mixture remains substantially dry. Water must be permitted to escape from the reaction mixture as vapor, and hydrogen peroxide must be permitted time to form SCP and not accumulate as a liquid.

The presence of 1 1/2% to 13% hydroxyalkylidene diphosphonic acid in the hydrogen peroxide is critical to obtain a dry product. The diphosphonic acid appears to be effective during the reaction to permit water to be released from the reaction mixture rather than be retained as free or hydrate water. The presence of the diphosphonic acid does not appear to prevent formation of sodium carbonate monohydrate subsequent to the manufacture of the SCP. The amount of diphosphonic acid required is not related to chelation of polyvalent cations. The diphosphonic acid appears to promote the release of water from the reaction mixture in a similar manner to that described in EP-A-0 363 852 and EP-A-0 364 840. However, an entirely different product is formed than by the process of the above patent applications. The product made by the present process generally has a higher active oxygen content and contains water as water of hydration.

A particularly desirable diphosphonic acid is commercially available as a 60% solution of 1-hydroxyethylidene-1,1-diphosphonic acid under the tradename Dequest 2010 by Monsanto Corporation. The diphosphonic acid solution is usually employed in sufficient quantity to reduce the concentration of 65% to 85% hydrogen peroxide to about 50% to 75%. Preferably sufficient diphosphonic acid should be employed to provide 0.5% to 3.5% diphosphonic acid in the product.

For the purpose of this invention the term diphosphonic acid shall include any $C_2$-$C_6$ 1-hydroxyalkylidene-1,1-diphosphonic acid or salt. The diphosphonic acid in releasing the water from the reaction mixture assists in removing heat generated by the perhydration and hydration of sodium carbonate. Whatever mechanism is involved, the present process eliminates the problems of the prior art dry processes which produced an unsatisfactory SCP product even when the process was broken up into several steps. The present process also avoids the need for maintaining the reaction mixture wet for at least 5 minutes as taught by US-A-3 860 694 and other prior art "dry" processes.

The amount of sensible heat necessary can be determined easily by one skilled in the art without undue experimentation. Sensible heat can be added to the reaction mixture when more dilute hydrogen peroxide is employed or in the event that insufficient water is being evaporated to maintain the desired temperature or sensible heat can be withdrawn when more highly concentrated hydrogen peroxide is employed. Heat transfer can be accomplished by means well known to the art such as heating or cooling the reactor walls, or by heating or cooling with air contacting the reaction mixture.

The product may then be cooled by any known means, for example, by passing ambient air through the reactor, cooling the reactor walls, preferably to a temperature in the range of 15°C to 50°C, to provide a free-flowing, stable, granular sodium carbonate perhydrate product.

The following examples are provided to further illustrate the process.

## EXAMPLES

Commercial sodium carbonate (FMC Corporation Grade 120) was employed as a raw material. Particle size distribution on separate samples is presented as Table I comparing two samples each of unsieved (T1 and T2), a minus 70 mesh cut (S1 and S2) and a plus mesh cut (L1 and L2). Table I demonstrates the uniformity of the sodium carbonate particles.

As used herein mesh size is the alternative U.S. Standard Sieve designation of the ASTM publication E380-79, Standard for Metric Practice and is used interchangeably with the equivalent particle size in micrometers of a U.S. Standard Sieve.

Unless otherwise stated the following procedure was employed to prepare SCP containing 13.5% active oxygen. A ribbon blender was charged with 200 parts by weight sodium carbonate which was preheated to 60°C. While the blender was turning at 58 rpm, an aqueous solution consisting of 64 parts by weight hydrogen peroxide plus 7 parts by weight of a 60% solution of 1-hydroxyethylidene-1,1-diphosphonic acid was sprayed onto the bed. Air heated at 70°-80°C was directed over the bed of the reaction mixture to maintain the bed temperature at 65°-70°C. After all of the hydrogen peroxide solution was added the dry reaction mixture was cooled to 50°C. The reaction mixture appeared to be composed of free-flowing, dry particles throughout the reaction period.

## COMPARATIVE EXAMPLE A

A sample was processed as above, but without any diphosphonic addition. The reaction mixture became wet and began to decompose. This confirms the teaching of US-A-4 171 280 to Maddox and demonstrates the criticality of the diphosphonic acid to make a product contain more than 6% active oxygen.

## EXAMPLE 1

Two samples of sodium carbonate were processed by the general procedure. In comparative sample 1A +70 mesh sodium carbonate was employed while in Inventive Example 1B the sodium carbonate was -70 mesh. Results are presented as Table II. The 20 and 40 mesh product fraction of Example 1B was composed of agglomerates as is evident from the feed distribution of Table I. Example 1A also shows that the assay of the larger particles was low. In Example 1A the assay of the composite sample was only 11.5% AO although the example was designed to produce a 13.5% AO product.

## EXAMPLE 2

A hydrogen peroxide diphosphonic acid solution was fed to a sodium carbonate feed to obtain a 13.5% AO product. Run 104, unsieved sodium carbonate, had an 84% peroxygen efficiency. Runs 102 and 105 (-70 mesh cuts) had a 98% peroxygen efficiency. Runs 101 and 103 (+70 mesh cuts) could not be brought up to a 13.5% AO assay.

## EXAMPLE 3

Six samples of SCP were produced with a range of active oxygen contents using unsieved and -70 mesh cuts of sodium carbonate feed. The loss of active oxygen was observed after storage for two weeks at 40°C at 80% relative humidity. Results are presented as Table III which shows the present process can produce a stable product ranging from 10.6% to 14% AO.

## EXAMPLE 4

A sample of SCP made by the above process was analyzed and the results are presented as Table IV. Total alkalinity and percent $H_2O_2$ were determined by titration. Water loss was determined by loss in weight at 170°C for 60 minutes corrected for hydrogen peroxide present. The percentage of diphosphonic acid was determined by difference which checked with the amount added initially.

## TABLE I

### SODIUM CARBONATE % PARTICLE SIZE DISTRIBUTION

| Size | | Unsieved | | -70 Mesh | | +70 Mesh | |
|------|------|------|------|------|------|------|------|
| μm | Mesh | T1 | T2 | S1 | S2 | L1 | L2 |
| 425 | 40 | 3.89 | 3.45 | 0.01 | 0.07 | 4.45 | 4.37 |
| 300 | 50 | 20.68 | 20.03 | 0.02 | 0.02 | 31.69 | 29.61 |
| 212 | 70 | 37.88 | 37.91 | 11.36 | 20.51 | 55.83 | 57.70 |
| 150 | 100 | 22.40 | 21.67 | 44.92 | 44.09 | 7.73 | 7.99 |
| 106 | 140 | 10.48 | 11.19 | 28.46 | 23.87 | 0.16 | 0.17 |
| 75 | 200 | 2.76 | 3.18 | 8.89 | 7.09 | 0.04 | 0.02 |
| <75 | <200 | 1.91 | 2.57 | 6.34 | 4.36 | 0.10 | 0.13 |

## TABLE II

### ANALYSIS OF SAMPLES BY PARTICLE SIZE

| Mesh | +70 Mesh Feed Comparative Example 1A | | -70 Mesh Feed Comparative Example 1B | |
|---|---|---|---|---|
| | wt. | Assay % AO | % wt. | Assay % AO |
| 20 | 4.52 | 6.8 | 11.54** | 13.9 |
| 40 | 16.58 | 9.4 | 3.10** | 13.7 |
| 70 | 66.37 | 11.0 | 16.02 | 13.8 |
| 100 | 10.17 | 13.2 | 25.51 | 13.8 |
| 140 | 2.0 | 12.4 | 21.25 | 14.0 |
| 200 | 0.25 | 12.7 | 14.2 | 14.1 |
| <200 | 0.09 | * | 9.5 | 14.6 |
| Composite Sample | 11.5*** | | 13.8 | |

\*    insufficient sample

**   these were agglomerates of finer particles

*** maximum attainable assay

## TABLE III

### DECOMPOSITION IN 2 WEEKS AT 40°C AND 80% RH

| No. | Sample | % AO | % Active Oxygen Loss |
|---|---|---|---|
| 1 | Unsieved | 10.7 | 25 |
| 2 | Unsieved | 13.3 | 51 |
| 3 | -70 cut | 10.6 | 2 |
| 4 | -70 cut | 11.5 | 11 |
| 5 | -70 cut | 13.4 | 2 |
| 6 | -70 cut | 13.7 | 6 |

6

## TABLE IV

### ANALYSIS OF SCP SAMPLES

| Analysis | Run 109 |
|---|---|
| % $Na_2CO_3$ | 67.1 |
| % $H_2O_2$ | 29.4 |
| % $H_2O$ (Wt. Loss at 170°C corrected for $H_2O_2$) | 1.3 |
| % Diphosphonic Acid by diff. | 2.2 |

## Claims

1. A process for manufacturing a sodium carbonate perhydrate characterized by (a) uniformly distributing an aqueous solution comprising 50% to 70% by weight hydrogen peroxide and 1 ½% to 13% by weight of a $C_2$ to $C_6$ 1-hydroaxyalkylidene-1,1-diphosphonic acid onto a substantially dry, agitated, particulate reaction mixture initially comprising substantially anhydrous granular sodium carbonate having a particle size less than 212 micrometers, (b) concurrently balancing the heats of hydration and of perhydration of sodium carbonate and the heat of evaporation of water with sufficient sensible heat transfer to maintain the reaction mixture at a temperature between 50°C and 80°C and to evaporate substantially all of the free water from the resulting reaction mixture and (c) cooling the resulting reaction mixture to provide said product as a free-flowing, stable, granular material with a particle size distribution substantially the same as the sodium carbonate and containing 13.8 to 14.6% active oxygen.

2. The process of claim 1 characterized in that the diphosphonic acid is 1-hydroxyethylidene-1,1-diphosphonic acid.

3. The process of claim 1 characterized in that 12 to 18 parts by weight of a 60% solution of 1-hydroxyethylidene-1,1-diphosphonic acid is incorporated into 100 parts by weight 70 wt. percent hydrogen peroxide to form a 60% $H_2O_2$ solution containing 7% 1-hydroxyethylidene-1,1-diphosphonic acid.

4. The process of claim 1 characterized in that the temperature of the reaction mixture is maintained between 60°C and 70°C.

5. The process of claim 2 characterized in that the temperature of the reaction mixture is maintained between 60°C and 70°C.

6. The process of claim 3 characterized in that the temperature of the reaction mixture is maintained between 60°C and 70°C.

7. The process of claim 1 characterized in that sufficient 1-hydroxyalkylidene-1,1-diphosphonic acid is present in the hydrogen peroxide to provide 0.5% to 3.5% thereof in the product.

8. The process of claim 2 characterized in that sufficient 1-hydroxyalkylidene-1,1-diphosphonic acid is present in the hydrogen peroxide to provide 0.5% to 3.5% thereof in the product.

9. The process of claim 3 characterized in that sufficient 1-hydroxyalkylidene-1,1-diphosphonic acid is present in the hydrogen peroxide to provide 0.5% to 3.5% thereof in the product.

10. The process of claim 4 characterized in that sufficient 1-hydroxyalkylidene-1,1-diphosphonic acid is present in the hydrogen peroxide to provide 0.5% to 3.5% thereof in the product.

11. The process of claim 5 characterized in that sufficient 1-hydroxyalkylidene-1,1-diphosphonic acid is present in the hydrogen peroxide to provide 0.5% to 3.5% thereof in the product.

12. The process of claim 6 characterized in that sufficient 1-hydroxyalkylidene-1,1-diphosphonic acid is present in the hydrogen peroxide to provide 0.5% to 3.5% thereof in the product.

**Patentansprüche**

1. Verfahren zur Herstellung von Natriumcarbonatperhydrat, gekennzeichnet durch (a) gleichmäßiges Verteilen einer wässrigen Lösung enthaltend 50 bis 70 Gew.-% Wasserstoffperoxid und 1 1/2 bis 13 Gew.-% einer $C_2$-bis $C_6$-1-Hydroxyalkyliden-1,1-Diphosphorsäure auf ein im wesentlichen trockenes, geschütteltes, aus Partikeln bestehendes Reaktionsgemisch, das anfänglich im wesentlichen wasserfreies, granulatförmiges Natriumcarbonat mit einer Partikelgröße von weniger als 212 Micrometer enthält, (b) gleichzeitiges Ausgleichen der Hydrations- und Perhydrationswärmen des Natriumcarbonats und der Verdampfungswärme des Wassers mit genügend empfindlichem Wärmeübergang, um das Reaktionsgemisch auf einer Temperatur zwischen 50°C und 80°C zu halten und um im wesentlichen das gesamte freie Wasser aus dem resultierenden Reaktionsgemisch zu verdampfen; und (c) Kühlen des resultierenden Reaktionsgemisches, um das besagte Produkt als frei fließendes, stabiles, granulatförmiges Material mit einer Partikelgrößenverteilung, die im wesentlichen die gleiche wie die des Natriumcarbonates ist, und mit einem Gehalt von 13.8 bis 14.6% aktivem Sauerstoff bereitzustellen.

2. Verfahren nach Anspruch 1, dadurch gekennzeichnet, daß die Diphosphorsäure 1-Hydroxyethyliden-1,1-Diphosphorsäure ist.

3. Verfahren nach Anspruch 1, dadurch gekennzeichnet, daß 12 bis 18 Gewichtsteile einer 60%igen-Lösung von 1-Hydroxyethyliden-1,1-Diphosphorsäure in 100 Gewichtsteile von bezogen auf das Gewicht 70%igem Wasserstoffperoxid inkorporiert werden, um eine 60%ige $H_2O_2$-Lösung zu bilden, die 7% 1-Hydroxyethyliden-1,1-Disphosphorsäure enthält.

4. Verfahren nach Anspruch 1, dadurch gekennzeichnet, daß die Temperatur des Reaktionsgemisches zwischen 60°C und 70°C gehalten wird.

5. Verfahren nach Anspruch 2, dadurch gekennzeichnet, daß die Temperatur des Reaktionsgemisches zwischen 60°C und 70°C gehalten wird.

6. Verfahren nach Anspruch 3, dadurch gekennzeichnet, daß die Temperatur des Reaktionsgemisches zwischen 60° und 70°C gehalten wird.

7. Verfahren nach Anspruch 1, dadurch gekennzeichnet, daß genügend 1-Hydroxyalkyliden-1,1-Diphosphorsäure in dem Wasserstoffperoxid vorhanden ist, um 0.5% bis 3.0% davon in dem Produkt bereitzustellen.

8. Verfahren nach Anspruch 2, dadurch gekennzeichnet, daß genügend 1-Hydroxyalkyliden-1,1-Diphosphorsäure in dem Wasserstoffperoxid vorhanden ist, um 0.5% bis 3.5% davon in dem Produkt bereitzustellen.

9. Verfahren nach Anspruch 3, dadurch gekennzeichnet, daß genügend 1-Hydroxyalkyliden-1,1-Diphosphorsäure in dem Wasserstoffperoxid vorhanden ist, um 0.5% bis 3.5% davon in dem Produkt bereitzustellen.

10. Verfahren nach Anspruch 4, dadurch gekennzeichnet, daß genügend 1-Hydroxyalkyliden-1,1-Diphosphorsäure in dem Wasserstoffperoxid vorhanden ist, um 0.5% bis 3.5% davon in dem Produkt bereitzustellen.

11. Verfahren nach Anspruch 5, dadurch gekennzeichnet, daß genügend 1-Hydroxyalkyliden-1,1-Diphosphorsäure in dem Wasserstoffperoxid vorhanden ist, um 0.5% bis 3.5% davon in dem Produkt bereitzustellen.

**12.** Verfahren nach Anspruch 6, dadurch gekennzeichnet, daß genügend 1-Hydroxyalkyliden-1,1-Diphosphorsäure in dem Wasserstoffperoxid vorhanden ist, um 0.5% bis 3.5% davon in dem Produkt bereitzustellen.

## Revendications

**1.** Procédé de préparation de perhydrate de carbonate de sodium caractérisé en ce que :
(a) on distribue de façon uniforme une solution aqueuse comprenant de 50 % à 70 % en poids de péroxyde d'hydrogène et de 1,5 % à 13 % en poids d'un acide 1-hydroxyalkylidène-1,1-disphosphonique en $C_2$ à $C_6$ sur un mélange réactionnel particulaire, agité, pratiquement sec comprenant à l'origine du carbonate de sodium granulaire pratiquement anhydre possédant des tailles de particules inférieures à 212 micromètres ;
(b) on équilibre en même temps les chaleurs d'hydratation et de perhydratation du carbonate de sodium et la chaleur d'évaporation de l'eau avec un transfert de chaleur suffisamment sensible pour maintenir le mélange réactionnel à une température entre 50° C et 80° C et pour évaporer pratiquement toute l'eau libre du mélange réactionnel résultant ; et
(c) on refroidit le mélange réactionnel résultant pour fournir ledit produit sous la forme d'un matériau granulaire, stable, libre d'écoulement, avec une distribution de taille de particules pratiquement la même que celle du carbonate de sodium et contenant 13,8 à 14,6 % d'oxygène actif.

**2.** Le procédé de la revendication 1, caractérisé en ce que l'acide diphosphonique est l'acide 1-hydroxyéthylidène-1,1-diphosphonique.

**3.** Le procédé de la revendication 1, caractérisé en ce que 12 à 18 parties en poids d'une solution à 60 % d'acide 1-hydroxyéthylidène-1,1-diphosphonique sont incorporés dans 100 parties en poids de péroxyde d'hydrogène à 70 % pour former une solution d'$H_2O_2$ à 60 % contenant 7 % d'acide 1-hydroxyéthylidène-1,1-diphosphonique.

**4.** Le procédé de la revendication 1, caractérisé en ce que la température du mélange réactionnel est maintenue entre 60° C et 70° C.

**5.** Le procédé de la revendication 2, caractérisé en ce que la température du mélange réactionnel est maintenue entre 60° C et 70° C.

**6.** Le procédé de la revendication 3, caractérisé en ce que la température du mélange réactionnel est maintenue entre 60° C et 70 C.

**7.** Le procédé de la revendication 1, caractérisé en ce que l'acide 1-hydroxyalkylidène-1,1-diphosphonique est présent suffisamment dans le péroxyde d'hydrogène pour en fournir 0,5 % à 3,5 % dans le produit.

**8.** Le procédé de la revendication 2, caractérisé en ce que l'acide 1-hydroxyalkylidène-1,1-diphosphonique est présent suffisamment dans le péroxyde d'hydrogène pour en fournir 0,5 % à 3,5 % dans le produit.

**9.** Le procédé de la revendication 3, caractérisé en ce que l'acide 1-hydroxyalkylidène-1,1-diphosphonique est présent suffisamment dans le péroxyde d'hydrogène pour en fournir 0,5 % à 3,5 % dans le produit.

**10.** Le procédé de la revendication 4, caractérisé en ce que l'acide 1-hydroxyalkylidène-1,1-diphosphonique est présent suffisamment dans le péroxyde d'hydrogène pour en fournir 0,5 % à 3,5 % dans le produit.

**11.** Le procédé de la revendication 5, caractérisé en ce que l'acide 1-hydroxyalkylidène-1,1-diphosphonique est présent suffisamment dans le péroxyde d'hydrogène pour en fournir 0,5 % à 3,5 % dans le produit.

**12.** Le procédé de la revendication 6, caractérisé en ce que l'acide 1-hydroxyalkylidène-1,1-diphosphonique est présent suffisamment dans le péroxyde d'hydrogène pour en fournir 0,5 % à 3,5 % dans le produit.